# EUROPEAN PATENT SPECIFICATION

(11) **EP 1 131 593 B1**
(45) Date of publication and mention of the grant of the patent: **16.10.2002**
(21) Application number: 99944405.2
(22) Date of filing: 16.08.1999
(51) Int. Cl.: F28F 9/00, F28F 9/02, F28F 9/04

(54) **HEAT EXCHANGER**
WÄRMETAUSCHER
ECHANGEUR DE CHALEUR

(30) Priority: 17.11.1998 US 193432
(43) Date of publication of application: 12.09.2001
(73) Proprietor: NORSK HYDRO ASA, 0240 Oslo (NO)
(72) Inventor: INSALACO, Jeffrey, Lee, Brandon, MS 39042 (US)
(74) Representative: Bleukx, Lucas Lodewijk M.
(86) International application number: PCT/EP99/05990
(87) International publication number: WO 00/029800

(56) References cited:
- EP-A- 0 516 413
- EP-A- 0 747 650
- EP-A- 0 795 730
- US-A- 4 597 597
- US-A- 5 570 737

## Description

The present invention relates to a heat exchanger for an automobile, the heat exchanger comprising:
- a manifold having a wall defining an internal passage within the manifold and an outer perimeter of the manifold;
- a mounting block attached to the manifold, the mounting block comprising a flange portion having a surface that engages approximately half of the outer perimeter of the manifold and
- means formed on the mounting block for securing the heat exchanger to an automobile.

Such a heat exchanger is known from EP-A-0 795 730.

Heat exchangers for automotive applications typically have tubes interconnected between a pair of manifolds, headers or tanks. Automotive heat exchangers require some type of mounting bracket for mounting and securing the heat exchanger within the engine compartment of an automobile. For structural strength, mounting brackets are typically attached to or formed integrally with the heat exchanger manifolds. The strength of a mounting bracket and the manner in which the bracket is attached to the heat exchanger is of considerable concern, since failure of the bracket can lead to severe damage to the heat exchanger, with the added potential for the manifold becoming punctured or fractured.

Inlet and outlet fittings are also mounted to one or both manifolds, to which supply and return pipes are connected for transporting fluid to and from the heat exchanger. An alternative to a fitting is an inlet/outlet block, with one block typically being brazed to each manifold. In Japanese patent application 6-229696, an inlet/outlet block is shown as having a machined port that is aligned with an opening formed in the header to which the block is mounted. A sleeve is positioned and brazed within the port and opening so that a leak-free path is provided between the block and header. A threaded bore is provided in the face of the block by which a pipe coupled to the port is secured to the block.

In EP-A-0 795 730 and US-A-5 570 737 there is described a mounting block for a heat exchanger, which is comparable with the mounting block described in JP-A-6-229696.

The prior art as described above does not disclose or suggest how a heat exchanger mounting bracket could be modified to also serve the role of an inlet/outlet block, while retaining its ability to reliably mount and secure a heat exchanger within the physically demanding operating environment of an automobile.

A particular concern would be that the inlet/outlet port would seriously compromise the integrity of the attachment strength between the mounting bracket and manifold. However, to reduce weight and simplify assembly, it would be desirable if the functions of both a mounting bracket and an inlet/outlet block could be incorporated into a single component.

It is an object of this invention to provide a heat exchanger equipped with a mounting block that also Is configured with an inlet/outlet port through which fluid is transported to and from the heat exchanger.

It is another object of this invention that the mounting block incorporates several features that promote a reliable and secure attachment to the heat exchanger.

It is a further object of this invention that the mounting block includes a sleeve that ensures a leak-free joint between the mounting block and the heat exchanger, and optionally also aids in securing the mounting block to the heat exchanger.

According to the present invention, there is provided a heat exchanger comprising the features of claim 1.

With the configuration according to the invention, the mounting block secures the heat exchanger within the engine compartment of an automobile, and also provides the inlet/outlet port to which a supply/return pipe is attached for transporting a fluid to or from the heat exchanger. The mounting block preferably provides one or more features that promote the integrity of the block-to-manifold joint. In a preferred embodiment, grooves are present in the surface of the flange portion of the mounting block of which engage raised portions on the perimeter of the manifold in order to aid in securing the mounting block to the manifold. The remaining grooves provide reservoirs between the mounting block and manifold for braze material that metallurgically joins the mounting block to the manifold. Also included in the preferred embodiment is a sleeve disposed partially within the inlet/outlet port of the mounting block and partially within the opening in the wall of the manifold, so as to provide a leak-free joint between the mounting block and manifold. The sleeve can optionally be configured to assist in securing the mounting block to the manifold.

Assembly of the mounting block to the manifold generally entails engaging the surface of the flange portion of the mounting block with the outer perimeter of the manifold, so that the inlet/outlet port fluidically communicates with the opening in the wall of the manifold. If present, the grooves on the flange portion of the mounting block are engaged with the raised portions on the manifold to assist at least temporarily in securing the block to the manifold. If employed, the sleeve is installed which, if appropriately configured, further serves to secure the block to the manifold. The mounting block is then preferably brazed in place with braze material deposited or otherwise accumulating in the grooves on the flange portion of the block. Simultaneously, the sleeve may be brazed in place within the inlet/outlet port and the opening in the manifold. The mounting block can then be used to mount the heat exchanger to an automobile, after which a supply/return pipe is connected to the inlet/outlet port of the mounting block.

In view of the above, it can be seen that the mounting block of this invention makes possible the combination of a mounting bracket and an inlet/outlet block for both mounting a heat exchanger and attaching supply/retum pipes to the heat exchanger with a single component. To promote this capability, the mounting block is preferably equipped with features that structurally enhance the attachment of the block to the manifold, so that the inlet/outlet port does not compromise the integrity of the joint strength between the block and manifold.

Other advantages of this invention will be better appreciated from the following detailed description.

The present invention will now be described, by way of example, with reference to the accompanying drawings, in which:
- Figure 1: is a perspective view of a heat exchanger mounting block in accordance with this invention;
- Figure 2: is a cross-sectional view of the mounting block of Figure 1 shown mounted to a heat exchanger manifold in accordance with this invention; and
- Figures 3: through 6 illustrate steps for installing a sleeve within the mounting block and manifold in accordance with an optional embodiment of this invention.

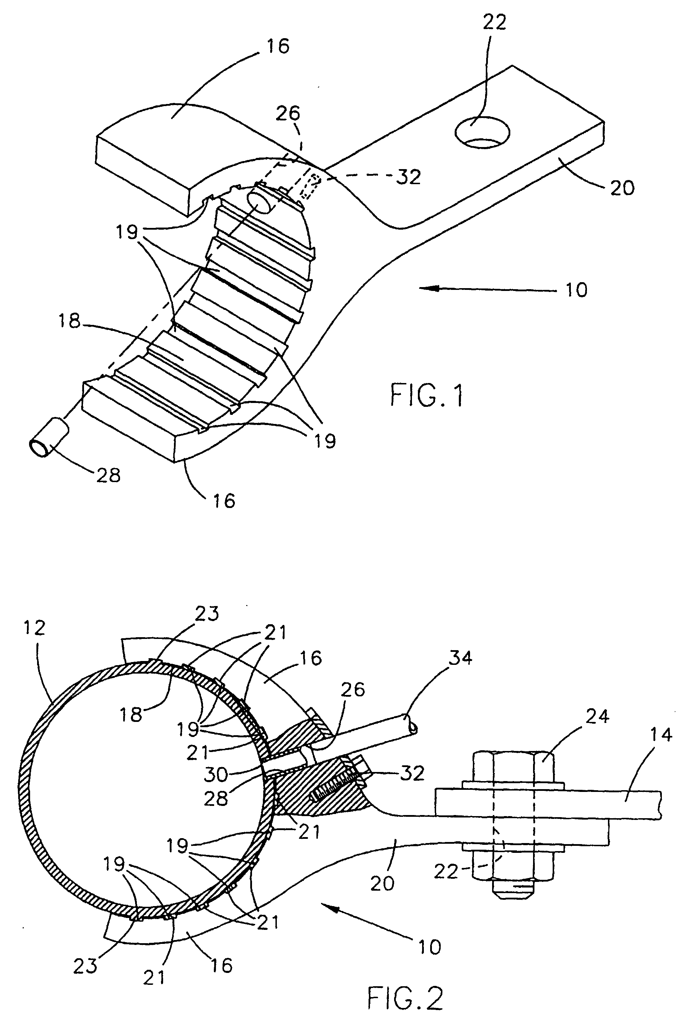

Shown in Figures 1 and 2 is a mounting block 10 for a heat exchanger unit (not shown). The block 10 is shown in Figure 2 mounted to a heat exchanger manifold 12. According to this invention, the mounting block 10 has dual functions, one of which is to mount a heat exchanger to the appropriate support structure 14 within the engine compartment of an automobile, as represented in Figure 2. The second function of the block 10 is to serve as an inlet/outlet block for fluid flow to and from the heat exchanger. While a particular configuration is shown for the block 10 in the drawings, and the block 10 is described for installation in an automobile, those skilled in the art will appreciate that other block configurations and other applications, including those outside the automotive industry, are possible with this invention.

The block 10 includes a pair of flanges or tabs 16 having a semicircular shape and defining a concave surface 18. As shown in Figure 2, the surface 18 is shaped to be mated with the circular outer perimeter of the manifold 12. As also seen from Figure 2, the surface 18 preferably contacts about half of the perimeter of the manifold 12, and preferably more than half of the perimeter in order to effectively lock the block 10 onto the manifold 12. For this reason, the cross-section of the tabs 16 is preferably tailored to provide adequate flexibility to allow the tabs 16 to expand around the manifold 12 during assembly of the block 10 onto the manifold 12. The block 10 further includes a mounting flange 20 having a mounting hole 22, through which a bolt 24 is inserted for attaching the block 10 to the automobile support structure 14 as shown in Figure 2. In view of the above structural requirements, a preferred material for the block 10 is an aluminum alloy, though it is foreseeable that other materials could be used.

Formed in the surface 18 of the tabs 16 are a number of grooves 19 that are generally oriented parallel to the axis of the concave surface 18. As seen in Figure 2, the grooves 19 accommodate a braze material 21 for metallurgically joining the block 10 to the manifold 12. The braze material 21 can be deposited as a paste in the grooves 19, or the braze material 21 can originally be present as a cladding on the block 10 or manifold 12 and thereafter accumulate in the grooves 19 during the brazing operation. Notably, the grooves 19 facilitate the escape and removal of a brazing flux during the brazing operation. Figure 2 also shows the manifold 12 as including a pair or raised portions, shown as an oppositely-disposed pair of seams 23. Two of the grooves 19 are engaged with the seams 23 in order to more securely mount the block 10 to the manifold 12 prior to the brazing operation.

Shown extending through the block 10 is an inlet/outlet port 26. As seen in Figure 2, the port 26 is aligned with an opening 30 in the wall of the manifold 12, and a sleeve 28 is installed in the passage formed by the aligned port 26 and opening 30. The sleeve 28 shown in Figures 1 and 2 is intended to be brazed in place in order to form a leak-proof joint between the block 10 and manifold 12. For this reason, preferred coating materials for the sleeve 28 are aluminum clad alloys such as AA4343, AA4045 and AA4047. A threaded bore 32 is located adjacent the inlet/outlet port 26 in order to secure a supply/return pipe 34 coupled to the port 26.

With the above construction, the mounting block 10 of this invention incorporates a number of different features that cooperate to secure the block 10 to the manifold 12 in a manner that promotes the structural integrity of the block-to- manifold joint, so that the joint remains fluid-tight over numerous thermal and pressure cycles. When initially mounted to the manifold 12, the tabs 16 of the block 10 serve to grip the perimeter of the manifold 12, so that the amount of movement possible between the block 10 and manifold 12 is drastically reduced. The initial attachment of the block 10 to the manifold 12 is further promoted by the engagement of the seams 23 on the manifold 12 with the two grooves 19 on the concave surface 18 of the tabs 16. The remaining grooves 19 provide sites for braze material 21 that permanently joins the block 10 to the manifold 12. Finally, the sleeve 28 provides a level of additional reinforcement within the flow path formed by the inlet/outlet port 26 and the opening 30 in the manifold 12.

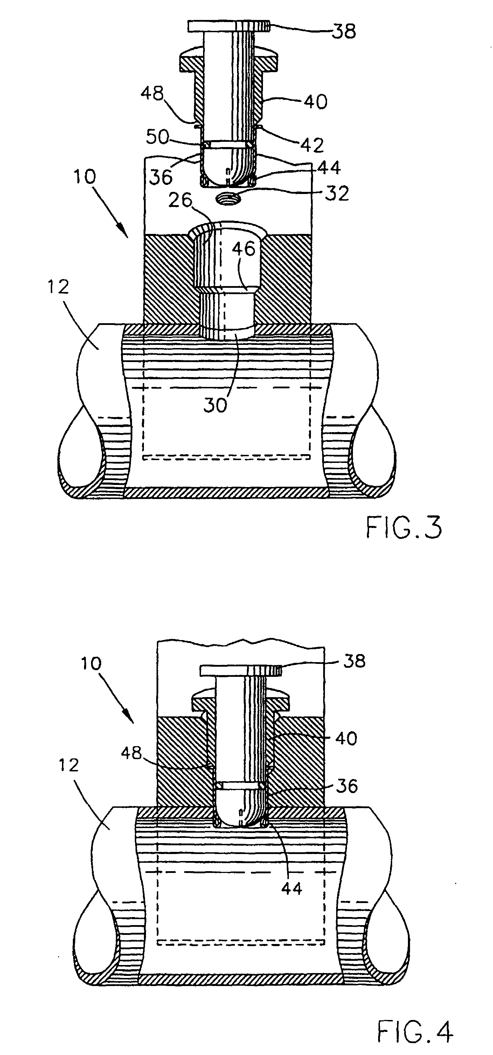

In accordance with an optional feature of this invention, a modified sleeve 36 shown in Figures 3 through 6 can be employed to further promote the structural integrity of the block-to-manifold joint. In Figure 3, the sleeve 36 is shown as being mounted on a pin 38 that is slidably received in a collet 40. An o-ring 50 serves to retain the sleeve 36 on the pin 38 prior to installing the sleeve 36 in the inlet/outlet port 26 of the block 10. The sleeve 36 is shown as having an annular flange 42 at its upper end and a rim 44 at its lower end. The annular flange 42 can be generally described as extending radially outward from the tube-shaped body of the sleeve 36, while the rim 44 is formed by an outwardly-rolled portion of the sleeve 36 that includes an approximately 180â bend, as shown in Figure 3. According to this feature of the invention, the annular flange 42 is intended to engage and be elastically deformed against a tapered shoulder 46 within the inlet/outlet port 26 of the mounting block 10, while the rim 44 engages and is elastically deformed against the interior wall surface of the manifold 12. The elastic deformation of the flange 42 and rim 44 creates a tensile load on the sleeve 36 that aids in securing the mounting block 10 to the manifold 12.

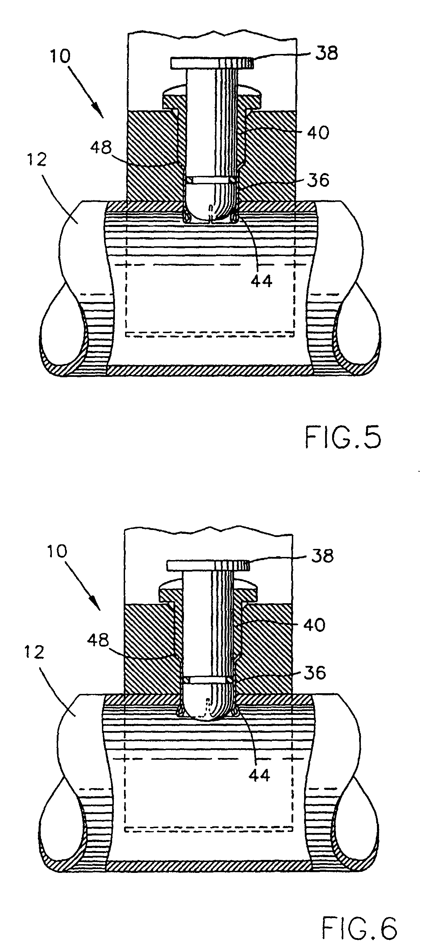

In Figure 4, the pin 38 is shown as having positioned the sleeve 36 within the port 26 until the annular flange 42 makes contact with the tapered shoulder 46 within the port 26. In Figure 5, a chamfered leading edge 48 of the collet 40 is shown as forcing the sleeve 36 further downward into the port 26, with the result that the annular flange 42 is elastically deformed to a degree sufficient to position the rim 44 of the sleeve 36 adjacent the interior wall surface of the manifold 12. Thereafter, and as portrayed in Figure 6, the pin 38 is forced downward relative to the collet 40, such that the rim 44 is expanded radially outwardly and into engagement with the interior wall surface of the manifold 12. Upon removal of the pin 38 and collet 40, the annular flange 42 and rim 44 will seek but be prevented from regaining their original undeformed shape shown in Figure 3, thereby generating the desired tensile load on the sleeve 36 that aids in securing the mounting block 10 to the manifold 12.

While the invention has been described in terms of a preferred embodiment, it is apparent that other forms could be adopted by one skilled in the art. Accordingly, the scope of the invention is to be limited only by the following claims.

## Claims

1. A heat exchanger for an automobile, the heat exchanger comprising:
- a manifold (12) having a wall defining an internal passage within the manifold and an outer perimeter of the manifold;
- a mounting block (10) attached to the manifold (12), the mounting block (10) comprising a flange portion (16) having a surface that engages approximately half of the outer perimeter of the manifold (12) and
- means formed on the mounting block (10) for securing the heat exchanger to an automobile,
**characterized in that** there is further provided an opening (30) through the wall of the manifold,
- an inlet/outlet port (26) extending through the mounting block (10) and in fluidic communication with the opening in the wall of the manifold (12); and
- means on the mounting block (10) for securing a supply/return pipe (34) to the inlet/outlet port of the mounting block.

2. A heat exchanger according to claim 1, **characterized in that** it further comprises grooves (19) in the surface of the flange portion (16).

3. A heat exchanger according to claim 2, **characterized in that** the manifold has a pair of raised portions (23) on the outer perimeter thereof, the raised portions being engaged by two of the grooves (19) in the surface of the flange portion (16) so as to secure the mounting block (20) to the manifold 12).

4. A heat exchanger according to claim 2, **characterized in that** braze material (21) disposed within at least some of the grooves (19) between the manifold (12) and the flange portion (16) of the mounting block (10), the braze material (21) metallurgically joining the mounting block (10) to the manifold (12).

5. A heat exchanger according to claim 1, **characterized in that** the securing means comprises a mounting flange (20) extending from the flange portion (16) of the mounting block (10) and a mounting hole (22) extending through the mounting flange (20).

6. A heat exchanger according to claim 1, **characterized in that** it comprises a sleeve (28) disposed partially within the inlet/outlet port (26) of the mounting block (16) and partially within the opening in the wall of the manifold (12).

7. A heat exchanger according to claim 6, **characterized in that** the sleeve (28) comprises a radially-outward extending annular flange engaging the inlet/outlet port (26) of the mounting block (10) and a rim engaging the wall of the manifold (12) so as to assist in securing the mounting block (10) to the manifold (12).

8. A heat exchanger according to claim 7, **characterized in that** the inlet/outlet port (26) of the mounting block (10) has an internal tapered shoulder and the annular flange of the sleeve (28) is elastically deformed against the internal tapered shoulder.

9. A heat exchanger according to claim 7, **characterized in that** the rim of the sleeve (28) comprises an outwardly-rolled portion of the sleeve (28) with an approximately 180° bend therein.

10. A heat exchanger according to claim 1, **characterized in that** the surface of the flange portion (16) of the mounting block (10) engages more than half of the outer perimeter of the manifold (12).

## Patentansprüche

1. Wärmetauscher für ein Kraftfahrzeug, der folgendes umfasst:
- ein Verteilungsrohr (12) mit einer Wandung, die einen inneren Durchgang innerhalb des Verteilungsrohrs und einen äußeren Umfang des Verteilungsrohrs definiert;
- einen Halterungsblock (10), der am Verteilungsrohr (12) angebracht ist, wobei der Halterungsblock (10) ein Greiferteil (16) mit einer Oberfläche umfasst, die etwa die Hälfte des äußeren Umfangs des Verteilungsrohrs (12) umschließt und
- ein am Halterungsblock (10) ausgebildetes Mittel zur Befestigung des Wärmetauschers an ein Kraftfahrzeug,
**dadurch gekennzeichnet, dass** des Weiteren eine Öffnung (30) durch die Wandung des Verteilungsrohrs bereitgestellt ist,
- eine Einlass/Auslassöffnung (26), die durch den Halterungsblock (10) ragt und einen Durchfluss mit der Öffnung in der Wandung des Verteilungsrohrs (12) gewährleistet; und
- ein Mittel am Halterungsblock (10) zur Befestigung eines Vorlauf-/Rücklaufrohrs (34) zur Einlass/Auslassöffnung des Halterungsblocks.

2. Wärmetauscher nach Anspruch 1, **dadurch gekennzeichnet, dass** er weiterhin Rillen (19) in der Oberfläche des Greiferteils (16) umfasst.

3. Wärmetauscher nach Anspruch 2, **dadurch gekennzeichnet, dass** das Verteilungsrohr ein Paar erhöhter Stellen (23) an seinem äußeren Umfang hat, wobei diese erhöhten Stellen in zwei der Rillen (19) in der Oberfläche des Greiferteils (16) eingreifen, um den Halterungsblock (20) fest mit dem Verteilungsrohr (12) zu verbinden.

4. Wärmetauscher nach Anspruch 2, **dadurch gekennzeichnet, dass** Lötmaterial (21) innerhalb wenigstens einiger der Rillen (19) zwischen dem Verteilungsrohr (12) und dem Greiferteil (16) des Halterungsblocks (10) eingebracht ist, wobei das Lötmaterial (21) den Halterungsblock (10) metallurgisch mit dem Verteilungsrohr (12) verbindet.

5. Wärmetauscher nach Anspruch 1, **dadurch gekennzeichnet, dass** das Befestigungsmittel einen Flanschhalter (20) umfasst, der sich vom Greiferteil (16) des Halterungsblocks (10) erstreckt und ein Befestigungsloch (22), das sich durch den Flanschhalter (20) erstreckt.

6. Wärmetauscher nach Anspruch 1, **dadurch gekennzeichnet, dass** er eine Hülse (28) umfasst, die sich teils innerhalb der Einlass/Auslassöffnung (26) des Greiferteils (16) und teils innerhalb der Öffnung in der Wandung des Verteilungsrohrs (12) befindet.

7. Wärmetauscher nach Anspruch 6, **dadurch gekennzeichnet, dass** die Hülse (28) einen radial nach außen führenden, ringförmigen Flansch umfasst, der in die Einlass/Auslassöffnung (26) des Halterungsblocks (10) eingreift, und einen Rand umfasst, der mit der Wandung des Verteilungsrohrs (12) zum Eingriff kommt, um damit bei der Befestigung des Halterungsblocks (10) an das Verteilungsrohr (12) behilflich zu sein.

8. Wärmetauscher nach Anspruch 7, **dadurch gekennzeichnet, dass** die Einlass/Auslassöffnung (26) des Halterungsblocks (10) eine innenliegende, konische Verjüngung hat und dass der ringförmige Flansch der Hülse (28) durch diese konische Verjüngung elastisch verformt ist.

9. Wärmetauscher nach Anspruch 7, **dadurch gekennzeichnet, dass** der Rand der Hülse (28) einen nach außen gewalzten Bereich der Hülse (28) umfasst, der eine Biegung von etwa 180° aufweist.

10. Wärmetauscher nach Anspruch 1, **dadurch gekennzeichnet, dass** die Oberfläche des Greiferteils (16) des Halterungsblocks (10) mehr als die Hälfte des äußeren Umfangs des Verteilungsrohrs (12) umschließt.

## Revendications

1. Echangeur de chaleur pour véhicule automobile, l'échangeur de chaleur comprenant :
- un collecteur (12) avec une paroi définissant un passage interne à l'intérieur du collecteur et avec un périmètre extérieur du collecteur ;
- un bloc de montage (10) attaché au collecteur (12), le bloc de montage (10) comprenant une partie faisant fonction de bride (16) et ayant une surface enserrant environ la moitié du périmètre extérieur du collecteur (12) et
- un moyen prévu sur le bloc de montage (10) pour fixer l'échangeur de chaleur à un véhicule automobile,
**caractérisé en ce qu'**une ouverture (30) est également prévue, ladite ouverture traversant la paroi du collecteur,
- une entrée/sortie (26) s'étendant au travers du bloc de montage (10) et se trouvant en communication fluide avec l'ouverture dans la paroi du collecteur (12) ; et
- un moyen sur le bloc de montage (10) pour fixer un tuyau d'alimentation/de retour (34) à l'entrée/la sortie du bloc de montage.

2. Echangeur de chaleur selon la revendication 1, **caractérisé en ce qu'**il comprend en outre des gorges (19) pratiquées dans la surface de la partie bride (16).

3. Echangeur de chaleur selon la revendication 2, **caractérisé en ce que** le collecteur présente, sur son périmètre extérieur, des parties surélevées (23) s'enclenchant dans deux des gorges (19) pratiquées dans la surface de la partie bride (16) de manière à fixer le bloc de montage (20) au collecteur (12).

4. Echangeur de chaleur selon la revendication 2, **caractérisé en ce que** le matériau de brasage (21) est déposé à l'intérieur d'au moins quelques-unes des gorges (19) entre le collecteur (12) et la partie bride (16) du bloc de montage (10), le matériau de brasage (21) reliant métallurgiquement le bloc de montage (10) au collecteur (12).

5. Echangeur de chaleur selon la revendication 1, **caractérisé en ce que** le moyen de fixation comprend une bride de montage (20) s'étendant de la partie bride (16) du bloc de montage (10) et un trou de fixation (22) traversant la bride de montage (20).

6. Echangeur de chaleur selon la revendication 1, **caractérisé en ce qu'**il comprend un manchon (28) placé en partie dans l'entrée/la sortie (26) du bloc de montage (16) et en partie dans l'ouverture pratiquée dans la paroi du collecteur (12).

7. Echangeur de chaleur selon la revendication 6, **caractérisé en ce que** le manchon (28) comprend une bride annulaire s'étendant vers l'extérieur en direction radiale et s'enclenchant dans l'entrée/la sortie (26) du bloc de montage (10) ainsi qu'un bord s'insérant dans la paroi du collecteur (12) de manière à contribuer à fixer le bloc de montage (10) au collecteur (12).

8. Echangeur de chaleur selon la revendication 7, **caractérisé en ce que** l'entrée/la sortie (26) du bloc de montage (10) a une collerette de section intérieure conique et que la bride annulaire du manchon (28) est déformée élastiquement contre la collerette de section intérieure conique.

9. Echangeur de chaleur selon la revendication 7, **caractérisé en ce que** le bord du manchon (28) comprend une partie de manchon (28) qui est enroulée vers l'extérieur et qui présente une courbure d'environ 180°.

10. Echangeur de chaleur selon la revendication 1, **caractérisé en ce que** la surface de la partie bride (16) du bloc de montage (10) enserre plus de la moitié du périmètre extérieur du collecteur (12),
